# EUROPÄISCHE PATENTANMELDUNG

(11) **EP 2 527 582 A2**
(43) Veröffentlichungstag der Anmeldung: **28.11.2012**
(21) Anmeldenummer: 12169213.1
(22) Anmeldetag: 24.05.2012
(51) Int. Cl.: E06B 3/70

(54) **Türblatt mit Heizelement**

(30) Priorität: 24.05.2011 AT 7572011
(71) Anmelder: Redwell Manufaktur GmbH, 8230 Hartberg (AT)
(72) Erfinder: Buschhoff, Michael, 8230 Hartberg (AT)
(74) Vertreter: KLIMENT & HENHAPEL

(57) **Zusammenfassung**

Türblatt (1) mit elektrischem Heizelement (2), bei dem erfindungsgemäß vorgesehen ist, dass das Heizelement (2) als elektrischer Heizleiter ausgeführt ist, der in einer Nut einer elektrisch isolierenden, starren Trägerplatte (5) gehalten ist, wobei die Trägerplatte (5) in einem Durchbruch des Türblatts (1) angeordnet ist und die Trägerplatte (5) eine spezifische Wärmekapazität über 1 kJ/(kg.K) aufweist. Bei einem erfindungsgemäßen Türblatt (1) wird aufgrund der Verwendung einer erfindungsgemäßen Trägerplatte (5) die thermische Beanspruchung des Türblattes (1) verringert, sowie beidseitige Wärmeabstrahlungen mit wahlweise unabhängiger Regelung der Wärmeabstrahlungsleistung ermöglicht, wobei eine leichte Demontage des Heizelements (2) möglich ist.

## Beschreibung

Die Erfindung bezieht sich auf ein Türblatt mit elektrischem Heizelement, gemäß dem Oberbegriff von Anspruch 1.

Es ist bekannt, ein elektrisches Heizelement in Form einer Heizfolie in eine Vertiefung eines Türblatts anzuordnen. Die Heizfolie ist mit einer Abdeckung als Wärmeabstrahlungsfläche versehen. Ein solches Heizelement emittiert Infrarot-Strahlung und bewirkt somit mithilfe von Strahlungswärme eine Erwärmung jenes Raumes, in die die Wärmeabstrahlungsfläche orientiert ist.

Türblätter mit elektrischen Heizelementen der bekannten Art verfügen jedoch über eine Reihe von Nachteilen. So verursachen etwa die durch die eingelegte Heizfolie bedingten, ständigen Wärmeschwankungen thermische Beanspruchungen des Türblattes, die im Laufe der Zeit zu einem Verziehen des Türblattes führen. Des Weiteren bringt es die notwendige Anordnung der Heizfolie in einer Vertiefung des Türblattes mit sich, dass keine beidseitige Wärmeabstrahlung erfolgen kann, insbesondere bei holzbasierten Türblättern, sondern lediglich in jene Richtung, in die die Wärmeabstrahlungsfläche orientiert ist. In weiterer Folge ist auch keine unabhängige Regelung der Wärmeabstrahlungsleistung in beide Abstrahlungsrichtungen möglich. Des Weiteren muss bei Fehlfunktionen des Heizelements in der Regel das gesamte Türblatt getauscht werden, da eine Demontage des Heizelements vom Türblatt kaum zerstörungsfrei erfolgen kann.

Es ist somit das Ziel der Erfindung, ein Türblatt mit einem eingebauten, elektrischen Heizelement so zu verbessern, dass die thermische Beanspruchung des Türblattes verringert wird, beidseitige Wärmeabstrahlungen mit wahlweise unabhängiger Regelung der Wärmeabstrahlungsleistung ermöglicht werden, und eine leichte Demontage des Heizelements möglich ist.

Diese Ziele werden durch die Merkmale von Anspruch 1 erreicht. Anspruch 1 sieht bei einem Türblatt mit elektrischem Heizelement vor, dass das Heizelement als elektrischer Heizleiter ausgeführt ist, der in einer Nut einer elektrisch isolierenden, starren Trägerplatte gehalten ist, wobei die Trägerplatte in einem Durchbruch des Türblatts angeordnet ist und die Trägerplatte eine spezifische Wärmekapazität über 1 kJ/(kg.K) aufweist. Die Wahl eines Heizleiters anstelle einer Heizfolie ermöglicht eine Verlegung in einer Nut einer elektrisch isolierenden, starren Trägerplatte. Die starre Trägerplatte nimmt die thermische Beanspruchung durch den Heizleiter auf, ohne das Türblatt selbst zu belasten. Es hat sich gezeigt, dass ab einer spezifischen Wärmekapazität von 1 kJ/(kg.K) der Trägerplatte keine nennenswerten Verformungen der Trägerplatte auftreten, und das Türblatt selbst nicht in Mitleidenschaft gezogen wird. Mechanische Beanspruchungen des Türblattes durch temperaturbedingte Verformungen können somit vermieden werden. Die Trägerplatte wird des Weiteren in einem Durchbruch anstatt einer bloßen Vertiefung des Türblattes angeordnet, wodurch einerseits eine beidseitige Wärmeabstrahlung sichergestellt werden kann, wie im Folgenden noch erläutert werden wird, und andererseits eine leichte Entnahme des Heizelements zu Wartungs- oder Reparaturarbeiten erfolgen kann. Außerdem können auf diese Weise auch zwei Heizelemente in den Durchbruch eingebaut werden, deren Abtrahlungsrichtung in entgegengesetzte Orientierung gewählt wird, sodass eine unabhängige Regelung der Wärmeabstrahlungsleistung in beide Raumrichtungen des Türblattes erfolgen kann.

Insbesondere wird vorgeschlagen, dass die Trägerplatte aus Vermiculit gefertigt ist. Vermiculit ist nicht nur leicht bearbeitbar und in seiner bestimmungsgemäßen Verwendung gesundheitlich unbedenklich, sondern verfügt auch über einen hohen Schmelzpunkt von 1315 °C, sodass es bei den für die Raumheizung erforderlichen Temperaturen formstabil und bedenkenlos einsetzbar ist. Aufgrund seiner spezifischen Wärmekapazität von 1.15 kJ/(kg.K) ist es außerdem in der Lage, Wärme gut zu speichern und auf diese Weise für eine gleichmäßigere Wärmeabgabe zu sorgen, und zwar sowohl in zeitlicher Hinsicht, als auch hinsichtlich einer gleichmäßigeren Flächenerwärmung, wodurch auch niedrigere Oberflächentemperaturen sichergestellt werden können.

Des Weiteren wird vorgeschlagen, dass das elektrische Heizelement eine Kleinspannungsversorgung aufweist. Als Kleinspannung werden in der Elektrotechnik Wechselspannungen bis 50 Volt Effektivwert bezeichnet. Spannungen dieser Größenordnungen gelten beim Berühren als ungefährlich, sodass auch bei mangelhafter Isolierung des Heizleiters aufgrund mechanischer Beschädigungen der Isolierung keine Verletzungen auftreten können.

Für eine solche Ausführung wird vorgeschlagen, dass mehrere Heizleiter in paralleler Schaltung vorgesehen sind. Auf diese Weise können die einzelnen Heizleiter in ihren Längenabmessungen kurz gehalten werden, um auch bei Kleinspannungen ausreichende Heizleistungen zu erzielen.

Hinsichtlich des Aufbaus des Heizelements wird des Weiteren vorgeschlagen, dass die Trägerplatte auf jener Seite, zu der sich die den Heizleiter führenden Nuten öffnen, von einer Hartglasemaillierten Oberflächenschicht abgedeckt ist. Eine solche Schicht verfügt über die positive Eigenschaft eines geringen Wärmeübergangsleitwerts, sodass kurzzeitige Berührungen ohne Verbrennungen oder Schmerzen möglich sind. Außerdem weist ein solches Material eine hohe Durchschlagsspannung von über 1000 Volt auf, sodass ein zusätzlicher Schutz gegenüber Stromschlägen bei mangelhafter Isolierung des Heizleiters gegeben ist.

Schließlich kann vorgesehen sein, dass die Hartglasemaillierte Oberflächenschicht mit einer Quarzsandbeschichtung versehen ist. Eine solche Beschichtung erhöht zusätzlich die elektrotechnische Sicherheit, da eine weitere, isolierende Schicht gegeben ist.

Die Erfindung wird im Folgenden anhand der beiliegenden Zeichnungen anhand eines Ausführungsbeispiels näher erläutert. Es zeigen hierbei die
Fig. 1 ein erfindungsgemäßes Türblatt in Frontalansicht mit einem eingebauten Heizelement,
Fig. 2 eine Schnittansicht entlang einer vertikalen Schnittebene einer ersten Ausführungsform eines erfindungsgemäßen Türblatts, und die
Fig. 3 eine Schnittansicht entlang einer vertikalen Schnittebene einer weiteren Ausführungsform eines erfindungsgemäßen Türblatts.

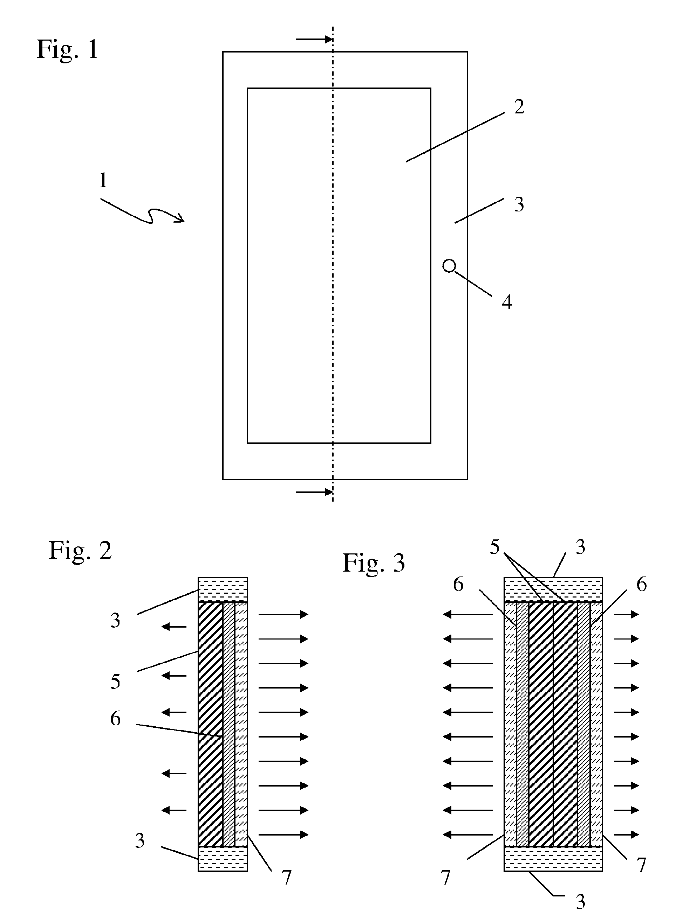

Die Fig. 1 zeigt zunächst ein erfindungsgemäßes Türblatt 1 in Frontalansicht mit einem eingebauten Heizelement 2, das in einem Rahmen 3 des Türblatts 1 gehalten ist. Der Rahmen 3 kann dabei aus Holz, Aluminium, oder einem sonst üblichen Material für Türblätter 1 gefertigt sein. Hinsichtlich des eingebauten Heizelements 2 unterliegt die Materialwahl des Rahmens 3 dabei keinen Einschränkungen. Der Rahmen 3 weist in herkömmlicher Weise einen Türgriff 4 auf, im gezeigten Bespiel etwa einen Türknauf.

Der Aufbau des Heizelements 2 wird anhand der Fig. 2 und 3 erläutert, die jeweils eine Schnittansicht entlang einer vertikalen Schnittebene, wie sie in der Fig. 1 eingezeichnet ist, zeigen. Das Heizelement 2 umfasst eine elektrisch isolierende, starre Trägerplatte 5, in die ein elektrischer Heizleiter in schlangenlinienartig verlaufenden Nuten dicht eingebettet ist. Die Trägerplatte 5 ist dabei etwa aus Vermiculit gefertigt, und wird auf jener Seite, zu der sich die den Heizleiter führenden Nuten öffnen, von einer Hartglasemaillierten Oberflächenschicht 6 abgedeckt, etwa über eine Verklebung. Die Hartglasemaillierte Oberflächenschicht 6 kann des Weiteren mit einer Quarzsandbeschichtung 7 versehen sein. Die Trägerplatte 5 nimmt dabei die vom Heizleiter abgegebene Wärme auf, und gibt sie an die Hartglasemaillierte Oberflächenschicht 6 ab. Des Weiteren kommt es auch zu einem direkten Wärmeübertrag vom Heizleiter auf die Hartglasemaillierte Oberflächenschicht 6. Die beidseitig des Türblattes 1 angeordneten Pfeile zeigen dabei die in den Raum abgestrahlte Wärme an, wobei in jene Richtung, die den Nuten und somit dem Heizleiter abgewandt ist, eine geringere Wärmeabstrahlung erfolgt, was durch die geringere Dichte an Pfeilen angedeutet ist. Der dargestellte Schichtaufbau stellt dabei eine vierfache Isolierung des stromführenden Heizleiters sicher, und zwar aufgrund der elektrischen Isolierung des Heizleiters selbst, der elektrisch isolierenden Trägerplatte 5, eine elektrische Isolierung, die aufgrund der Hartglasemaillierten Oberflächenschicht 6 sichergestellt ist, da letztere eine Durchschlagsspannung von über 1000 Volt aufweist, und schließlich die durch die Quarzsandbeschichtung 7 gegebene Isolierung.

In der Trägerplatte 5 ist des Weiteren ein Anschlusskasten angeordnet (in den Fig. 1 bis 3 nicht ersichtlich), in dem sich die Elektrik des Heizelements, sowie die Steuerelektronik und der Sicherheitsthermostat befinden. Der Anschlusskasten ist dabei mit einer externen Spannungsversorgung verbunden, etwa über ein Kabel, das von der Türzarge über den Rahmen 3 zum Anschlusskasten führt. Elektrische Anschlusskabel (in den Fig. 1 bis 3 nicht ersichtlich) führen schließlich vom Anschlusskasten zu den Heizleitern, die bei Stromdurchfluss Wärme abgeben und dabei die Trägerplatte 5 und die Hartglasemaillierte Oberflächenschicht 6 gleichmäßig erwärmen. Eine zusätzliche positive Eigenschaft der Hartglasemaillierten Oberflächenschicht 6 besteht in seinem geringen Wärmeübergangsleitwert. Diese Eigenschaft ermöglicht es, das Heizelement kurze Zeit anzufassen, ohne Verbrennungen oder Schmerzen zu erleiden, sodass selbst für Kleinkinder keine Verbrennungsgefahr besteht.

Für die Spannungsversorgung der Heizleiter wird vorgeschlagen, dass das elektrische Heizelement eine Kleinspannungsversorgung aufweist, etwa mithilfe eines Transformators, der die netzübliche Spannung entsprechend verringert. Für eine solche Ausführung ist es vorteilhaft, mehrere Heizleiter in paralleler Schaltung zu verlegen, die über jeweils eigene Anschlüsse mit der Kleinspannungsversorgung verbunden sind. Auf diese Weise können die einzelnen Heizleiter in ihren Längenabmessungen kurz gehalten werden, um auch bei Kleinspannungen ausreichende Heizleistungen zu erzielen.

Das Heizelement 2 eines erfindungsgemäßen Türblattes 1 erwärmt die angrenzenden Räumlichkeiten durch Infrarot-Strahlung, im Gegensatz zu üblichen Heizgeräten, die auf Wärmekonvektion basieren.

Eine weitere Ausführungsform für einen Aufbau des erfindungsgemäßen Türblattes 1 wird anhand der Fig. 3 erläutert, die die Verwendung von zwei unabhängigen Heizelementen 2 zeigt. Beide Heizelemente 2 bestehen dabei jeweils aus einer Trägerplatte 5, einer Hartglasemaillierten Oberflächenschicht 6, sowie einer Quarzsandbeschichtung 7. Des Weiteren verfügen auch beide Heizelemente 2 über eine eigene Regelung, sodass deren Wärmeabstrahlungsleistung unabhängig voneinander regelbar ist. Dieser Sachverhalt wird in der Fig. 3 durch die beidseits unterschiedlichen Dichten an Pfeilen angedeutet.

Wie oben beschrieben wurde, kann somit bei einem erfindungsgemäßen Türblatt 1 aufgrund der Verwendung einer elektrisch isolierenden, starren Trägerplatte 5 die thermische Beanspruchung des Türblattes 1 verringert werden. Des Weiteren können beidseitige Wärmeabstrahlungen mit wahlweise unabhängiger Regelung der Wärmeabstrahlungsleistung ermöglicht werden, wobei eine leichte Demontage des Heizelements 2 möglich ist.

## Patentansprüche

1. Türblatt (1) mit elektrischem Heizelement (2), **dadurch gekennzeichnet, dass** das Heizelement (2) als elektrischer Heizleiter ausgeführt ist, der in einer Nut einer elektrisch isolierenden, starren Trägerplatte (5) gehalten ist, wobei die Trägerplatte (5) in einem Durchbruch des Türblatts (1) angeordnet ist und die Trägerplatte (5) eine spezifische Wärmekapazität über 1 kJ/(kg.K) aufweist.

2. Türblatt nach Anspruch 1, **dadurch gekennzeichnet, dass** die Trägerplatte (5) aus Vermiculit gefertigt ist.

3. Türblatt nach Anspruch 1 oder 2, **dadurch gekennzeichnet, dass** das elektrische Heizelement (2) eine Kleinspannungsversorgung aufweist.

4. Türblatt nach Anspruch 3, **dadurch gekennzeichnet, dass** mehrere Heizleiter in paralleler Schaltung vorgesehen sind.

5. Türblatt nach einem der Ansprüche 1 bis 4, **dadurch gekennzeichnet, dass** die Trägerplatte (5) auf jener Seite, zu der sich die den Heizleiter führenden Nuten öffnen, von einer Hartglasemaillierten Oberflächenschicht (6) abgedeckt ist.

6. Türblatt nach Anspruch 5, **dadurch gekennzeichnet, dass** die Hartglasemaillierte Oberflächenschicht (6) mit einer Quarzsandbeschichtung (7) versehen ist.
